# EUROPEAN PATENT SPECIFICATION

(11) **EP 2 588 705 B1**
(45) Date of publication and mention of the grant of the patent: **04.03.2020**
(21) Application number: 10854223.4
(22) Date of filing: 30.06.2010
(51) Int. Cl.: E21B 10/20, E21B 10/22, F16C 35/067, F16C 19/38

(54) **BEARING ASSEMBLY FOR ROTARY DRILLS**
LAGERANORDNUNG FÜR DREHBOHRER
ENSEMBLE PALIER POUR FOREUSES ROTATIVES

(43) Date of publication of application: 08.05.2013
(73) Proprietor: SKF USA Inc., Lansdale, PA 19446 (US)
(72) Inventor: MARTIN, Kevin, Doylestown, PA (US)
(74) Representative: Kohl, Thomas
(86) International application number: PCT/US2010/040634
(87) International publication number: WO 2012/002961

(56) References cited:
- US-A- 2 915 291
- US-A- 2 915 291
- US-A- 3 995 367
- US-A- 4 738 322
- US-A- 4 865 137
- US-A- 5 586 611
- US-A- 5 586 611
- US-A1- 2007 046 119
- US-A1- 2009 173 546
- US-B1- 6 296 067
- US-B2- 7 188 691

## Description

The present invention relates to bearings, and more particularly to bearings for rotary drills.

Rotary drills are known and typically include a bit head with a plurality of rotatable bits each mounted on a separate shaft. The bit head is connected with a drill string that includes one or more sections of drill pipe. The drill pipe is rotated about a centerline such that the bits roll against a ground surface, causing each bit to rotate upon its associated shaft. Typically, each bit is rotatably secured to the shaft by a plurality of retaining balls located in a circumferential channel defined between the bit and the shaft. The balls are installed within the channel through a passage that extends through the shaft.

US 5586611 discloses a rotary drill in which cutter cones are rotationally supported on separate spindles via a dual split bushing arrangement. The arrangement comprises an inner split bushing immovably mounted on the spindle and a rotatable outer split bushing which is secured in immovable relation within the cutter cone by a lock element or threaded connection. Further examples of rotary drills are disclosed in US 2009/173546 and US 2915291.

### SUMMARY OF THE INVENTION

In one aspect, the present invention is a rotary drill comprising a base with a shaft and a bearing having a central axis and including an inner member disposed on the at least one shaft and an outer member disposed about the inner member. The bearing outer member is angularly displaceable relative to the inner member and has an outer circumferential surface and a recess extending generally radially inwardly from the outer surface. A bit has an inner circumferential surface defining a cavity, the bit being disposed about at least a portion of the shaft such that the bearing is disposed at least partially within the cavity. Further, a plurality of retainers in the form of spherical balls are simultaneausly disposed at least partially within the bearing outer member recess and are configured to engage with the bit so as to rotatably couple the bit with the shaft. Further, the bit has an outer surface and a passage extending between the bit outer surface and the inner circumferential surface, through which the plurality of retainers is installable into the recess.

### BRIEF DESCRIPTION OF THE SEVERAL VIEWS OF THE DRAWINGS

The foregoing summary, as well as the detailed description of the preferred embodiments of the present invention, will be better understood when read in conjunction with the appended drawings. For the purpose of illustrating the invention, there is shown in the drawings, which are diagrammatic, embodiments that are presently preferred. It should be understood, however, that the present invention is not limited to the precise arrangements and instrumentalities shown. In the drawings:
Fig. 1 is a partly broken-away, axial cross-sectional view of a bearing assembly of the present invention, shown installed in a bit of a rotary drill;
Fig. 2 is a broken-away, radial cross-sectional view taken through line 2-2 of Fig. 1;
Fig. 3 is a perspective view of a rotary bit head incorporating the bearing assembly;
Fig. 4 is a partly broken-away, axial cross-sectional view of the bit head, showing one head or base portion with a shaft and the bearing assembly;
Fig. 5 is an axial cross-sectional view of bearing of the bearing assembly;
Fig. 6 is a broken-away, axial cross-sectional view of the bearing assembly, showing a retainer passage;
Fig. 7 is an axial cross-sectional view of a bit;
Fig. 8 is broken-away, side elevational view of a bit head shaft;
Fig. 9 is a partly broken-away, axial cross-sectional view of an alternative construction of the bearing assembly;
Fig. 10 is a partly broken-away, axial cross-sectional view of another alternative construction of the bearing assembly; and
Fig. 11 is an enlarged, broken-away view of a section of Fig. 10.

### DETAILED DESCRIPTION OF THE INVENTION

Certain terminology is used in the following description for convenience only and is not limiting. The words "inner", "inwardly" and "outer", "outwardly" refer to directions toward and away from, respectively, a designated axis, a centerline or a geometric center of an element being described, the particular meaning being readily apparent from the context of the description. Further, as used herein, the word "connected" is intended to include direct connections between two members without any other members interposed therebetween and indirect connections between members in which one or more other members are interposed therebetween. The terminology includes the words specifically mentioned above, derivatives thereof, and words of similar import.

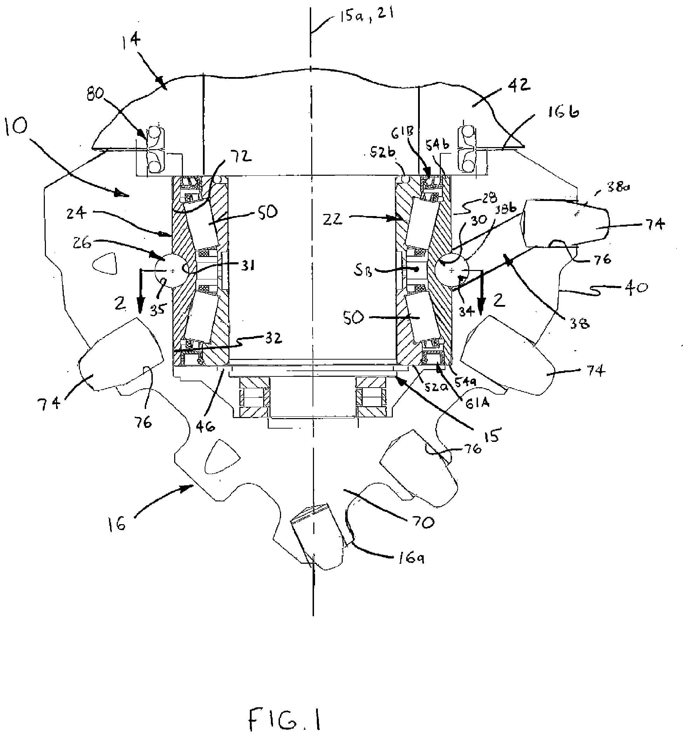

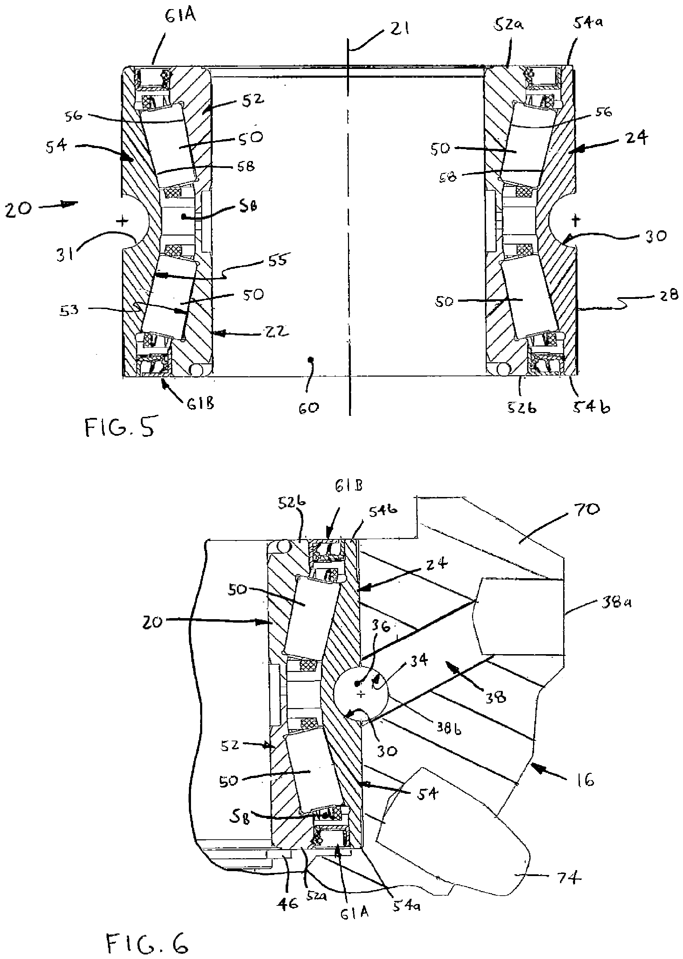

Referring now to the drawings in detail, wherein like numbers are used to indicate like elements throughout, there is shown in Figs. 1-11 a bearing assembly 10 for a rotary drill 12, the drill 12 including a bit head or base 14 with one or more shafts 15, at least one and preferably a plurality of bits 16, and at least one drill pipe (none shown), as described in further detail below. The bearing assembly 10 basically comprises a bearing 20, the bearing 20 having a central axis 21 and including an inner member 22 disposeable on one shaft 15 and an outer member 24 disposed about the inner member 22, and a plurality of retainers 26. The bearing outer member 24 is angularly displaceable about the central axis 21 with respect to the inner member 22 and has an outer circumferential surface 28 and a recess 30 extending generally radially inwardly from the outer surface 28. Each retainer 26 is disposed at least partially within the bearing outer member recess 30 and is configured to engage with an associated or proximal one of the bits 16 so as to rotatably couple the bit 16 with the shaft 15. Further, each bearing assembly 10 and/or its associated bit 16 are configured such that the bit 16 and the bearing outer member 24 are rotationally "interlocked" to prevent relative angular displacement between the bearing member 24 and the bit 16, as described in further detail below.

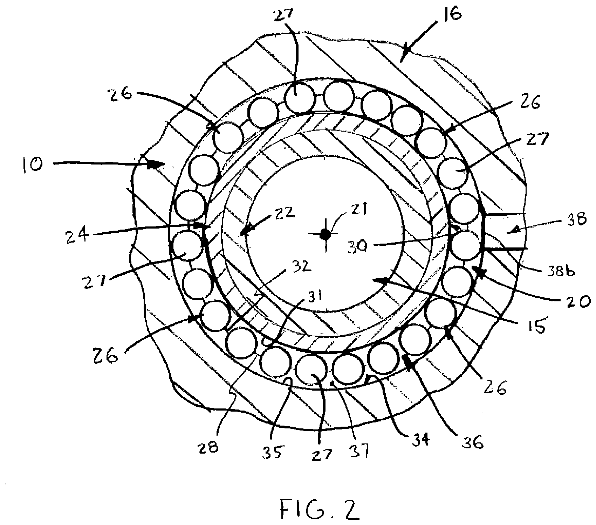

Each bit 16 has an inner circumferential surface 32 and at least one recess 34 extending generally radially outwardly from the surface 32, the bit recess 34 being generally alignable with the bearing recess 30 so as to form a retention cavity 36. Each recess 30, 34 is formed as an at least partially annular groove 31, 35, respectively, such that the retention cavity 36 defined by the aligned grooves 31, 35 is formed as an at least partially annular retention channel 37. As best shown in Fig. 2, each groove 31, 35 most preferably extends circumferentially about the bearing central axis 21 and is continuous, with the two grooves 31, 35 being generally alignable both radially and axially with respect to the central axis 21 so as to form a single, continuous retention channel 37 that is at least generally annular.

With the preferred retention channel structure, the retainers 26 are each simultaneously disposed at least partially within each of the aligned bit and bearing grooves 35, 31, respectively. Thus, the retainers 26 function to releasably lock the bit 16 onto the bearing 20, and thereby also onto the associated shaft 15, by interference between the retainers 26 and the portions of the bit 15 and the bearing 20 which surround/define the grooves 31, 35. The retainers 26 are spaced apart circumferentially about the central axis 21, each retainer 26 being disposed at least partially within the bearing groove 31 and configured to engage with the bit 16, as shown in Fig. 2. Further, as there may be clearance space between the outer surface 28 of the bearing outer member 24 and the bit inner surface 32, the retainers 26 are also each configured to transfer radial and axial loading between the bit 16 and the bearing 20, and thus also between the bit 16 and the shaft 15.

Although a single, continuous annular retention channel 37 formed by a pair of aligned grooves 31, 35 is preferred, the bearing 20 and/or the bit 16 may alternatively each include a plurality of separate, circumferentially-spaced recesses 30, 34, respectively, that align in pairs to form a plurality of separate retention cavities 36, each cavity 36 being generally spherical, generally arcuate, or having any other appropriate shape. Also, although the bit 16 has a recess 34/groove 35, such that the retainers 26 positively interlock with the associated bit 16, the retainers 26 may alternatively, and not according to the present invention, directly frictionally engage with a bearing inner surface 32 to thereby retain the bit 16 coupled with the associated shaft 15.

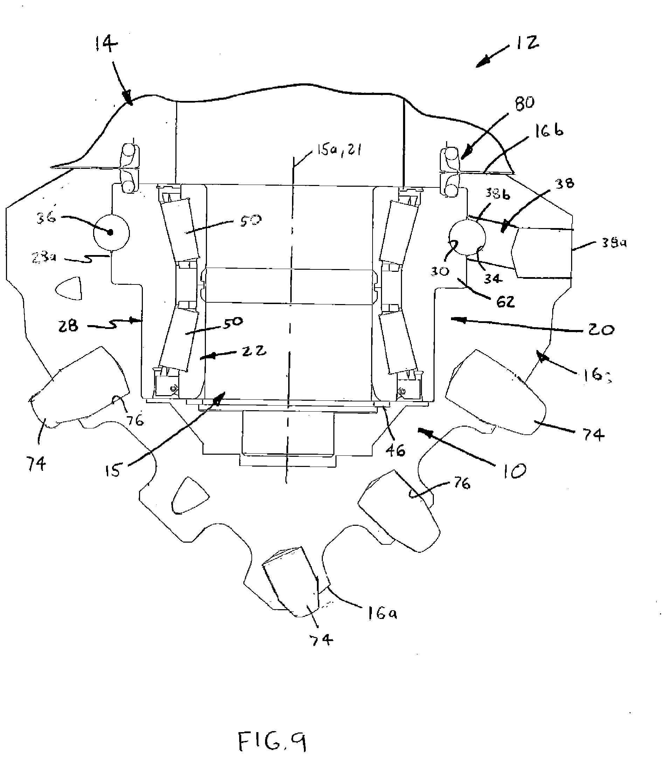

Further, each of the one or more bits 16 includes at least one access passage 38 for installation and removal of the retainers 26 into the retention cavity 36. Specifically, each bit 16 further has an outer surface 40 and the passage 38 extends generally radially between the bit outer and inner surfaces 40, 32, respectively. The passage 38 is preferably angled in an inward direction toward the bit front end 16a, as shown in Figs. 1, 4, 6 and 7 and described in further detail below, but may alternatively be angled in an inward direction toward the bit rear end 16b, as shown in Fig. 9. Furthermore, the passage 38 is communicable with at least the bearing recess 30, and preferably the two grooves 31, 35 forming the preferred continuous retention channel 37, such that each of the retainers 26 is installable into the recess 30/channel 37 through the bit passage 38. Furthermore, the bit 16 may only include a single access passage 38 when the bearing assembly 10 includes a single, continuous retention channel 37, but the bit 16 should include a plurality of passages 38 when the bearing assembly 10 includes a plurality of separate retention cavities 36 (i.e., at least one passage 38 for each cavity 36).

Preferably, each of the bearing and bit grooves 31, 35 has partially circular cross-sections in directions perpendicular to the bearing axis 21, such that the retention channel 37 is generally annular and has at least generally circular radial cross-sections with respect to the bearing axis 21 (i.e., radial directions), and the bit access passage 38 also has generally circular cross-sections. With the preferred passage and groove structures, each retainer 26 is formed as, or includes, a generally spherical ball 27 configured to roll through the passage 38 and into the bearing and bit grooves 31, 35 during installation into the retention channel 37. More specifically, each bit passage 38 has an outer end 38a at the bit outer surface 38 and an inner end 38b at the bit recess 34/groove 35 or, if the bit 16 is formed without a cavity/groove, at the bit inner surface 32. Further, the bit access passage 38 and each retainer 26 is configured (i.e., angled circular passage and spherical balls) such that the plurality of retainers 26 are installable into the two aligned grooves 31, 35 of the preferred retention channel 37 in the following manner.

Each retainer 26 is sequentially inserted through the bit passage outer end 38a and rolls through the passage 38, preferably assisted by gravity due to the angled passage 38 and orientation of the bit 16. The retainer 26 then passes through the passage inner end 38b and becomes disposed within the retention channel 37. As each subsequent retainer 26 enters the channel 37, the particular retainer 26 contacts at least one of the previously installed retainers 26, such that kinetic energy transferred to the retainers 26 located in the channel 37 displaces the retainers 26 already disposed within the channel 37 so that the plurality of retainers 26 become spaced circumferentially about the bearing central axis 21, as shown in Fig. 2.

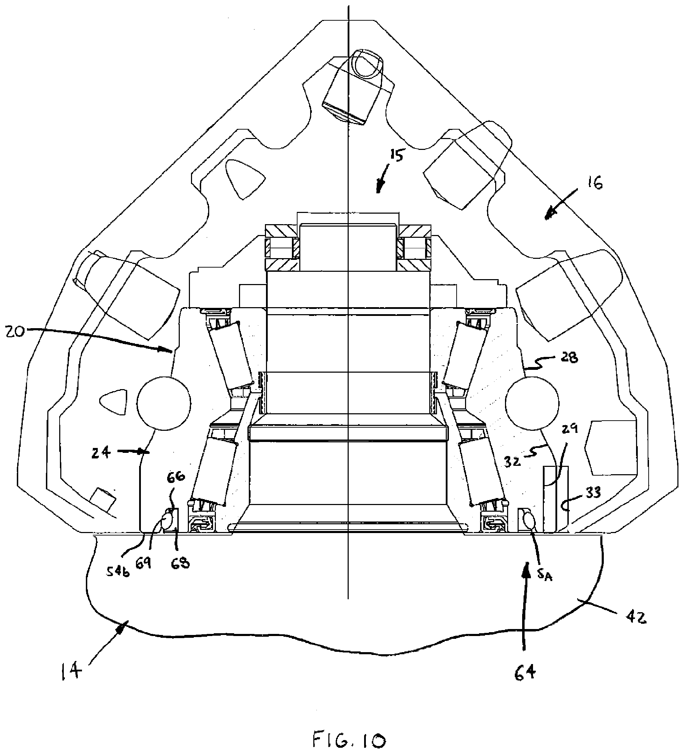

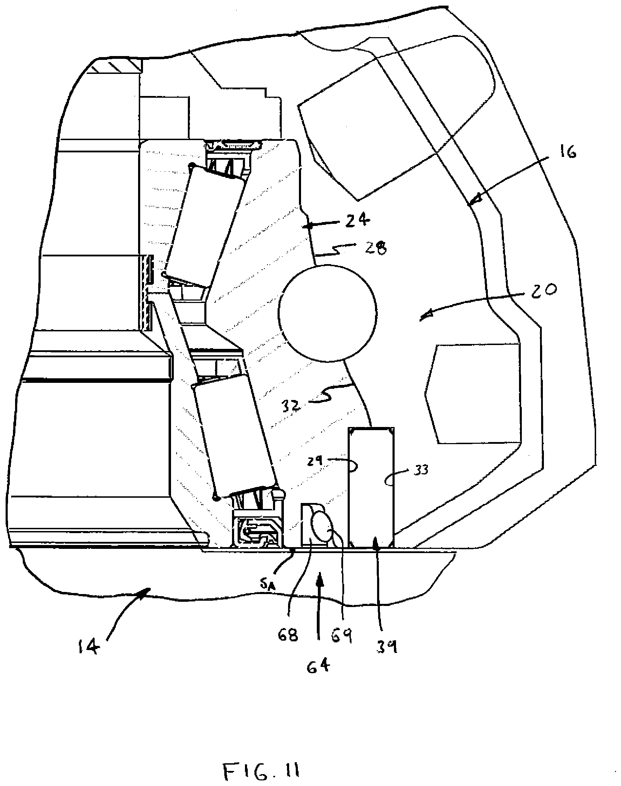

Referring to Figs. 10 and 11, as discussed above, each bearing assembly 10 and/or associated bit 16 are configured to positively rotationally interlock so as to prevent relative angular displacement between the bearing outer member 24 and the bit 16. Preferably, the bit outer member 24 includes at least one generally axial groove 29 extending radially inwardly from the member outer surface 28 and the bit 16 has at least one generally axial groove 33 extending radially outwardly from the bit inner surface 32 and generally alignable with one of the bearing member axial grooves 29. With this structure, a locking member 39 (Fig. 11), for example, a shaft or pin, is disposeable within each set of aligned grooves 29, 33 to interlock the bit 16 and the bearing 20. Preferably, the locking member 39 is first positioned within the bearing groove 29 and then the bit 16 is assembled onto/about the bearing 20 such that the locking member 39 becomes inserted into the associated bit groove 33. Further, each bearing 20 and associated bit 16 preferably includes a plurality of grooves 29, 33 (only one pair shown), respectively, spaced circumferentially about the bearing axis 21 and a separate locking member 39 (only one shown) is inserted within each pair of aligned grooves 29/33, and most preferably the bearing assembly 10 includes four locking members 39 and four groove pairs 29/33.

However, although separate locking members 39 are presently preferred, each bearing assembly 10 and associated bit 16 may be rotationally "interlockable" in any other appropriate manner, such as for example, by providing one or more splines or tongues in one member 24, 16 and corresponding grooves or recesses in the other member 16, 24, by forming each of the bit 16 and the bearing outer member 24 with mating interior and exterior perimeter surfaces (e.g., rectangular, hexagonal, octagonal, complex-shaped, etc.), or by another appropriate structure. Further, although it is preferred to positively interlock the bit 16 onto the bearing 20, the two components 16, 24 may be rotationally coupled or interlocked merely by a friction fit between the bearing outer surface 28 and the bit inner surface 32.

With the above-described structure, each bit 16 is readily installable onto a shaft 15 merely by positioning the bit 16 onto the bearing 20, as discussed above and described in further detail below, and then inserting retainers 26 through each bit access passage 38 until a desired number of retainers 26 become located within the retention channel 37. Alternatively, when it is desired to remove the bit 16 from the associated shaft 15, the retainers 26 are extracted from the retention channel 37, for example, by means of a magnet or by physically pushing or pulling the retainers 26 from the channel 37, so that the bit 16 may be pulled off the bearing 20, and thus the shaft 15, for maintenance, repair or replacement. Having described the basic components of the bearing assembly 10 and the rotary drill 12 above, these and other elements of the present invention are be described in further detail below.

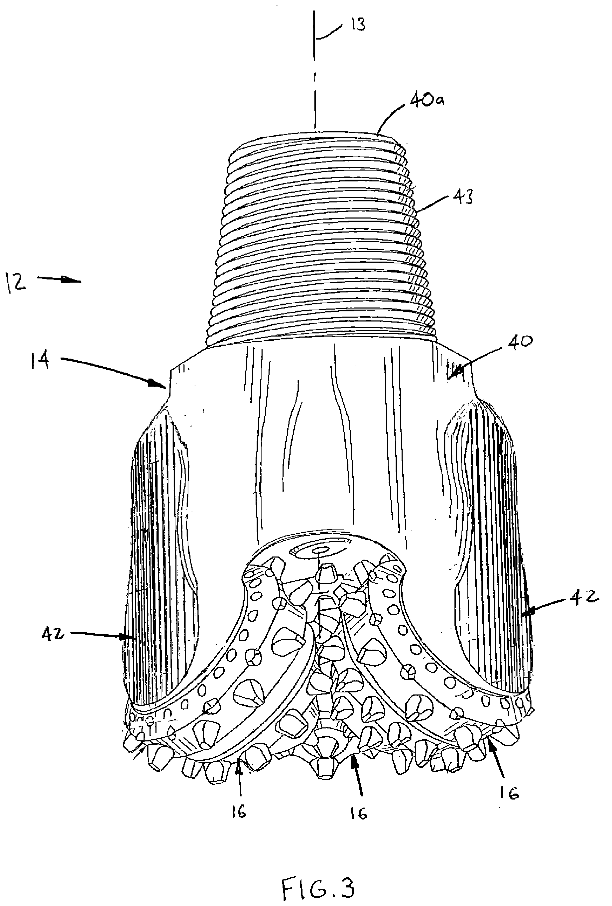

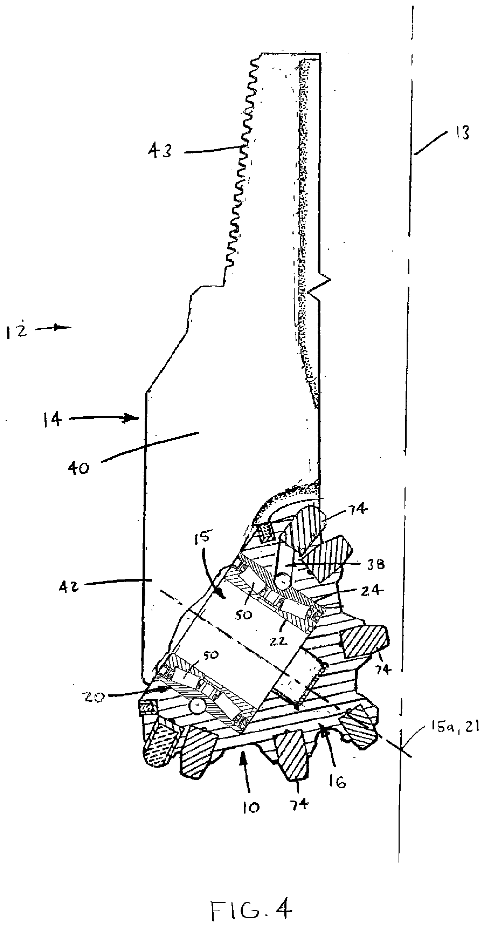

Referring to Figs 3 and 4, the bit assembly 10 is preferably used with a rotary drill 12 having a "bit head" or base 14 that includes a plurality of the shafts 15, the drill comprising a plurality of the bearings 20, a plurality of the bits 16, and a plurality of the retainers 26. Specifically, each bearing 20 is disposed about a separate one of the body shafts 15, each bit 16 is disposed about a separate one of the bearings 20, and a plurality of retainers 26 are disposed within the recess 30 of each of the bearings 20 and is engageable with a proximal bit 16 to rotatably couple the bit 16 with an associated one of the shafts 15. Preferably, the base 14 includes a generally cylindrical central portion 40 and a plurality of support portions 42 extending generally axially from the base portion 40, the support portions 42 being spaced circumferentially apart about a drill centerline 13. With this base structure, each shaft 15 is preferably mounted to a separate support portion 42 so as to extend both generally axially and generally radially inwardly toward the drill centerline 13.

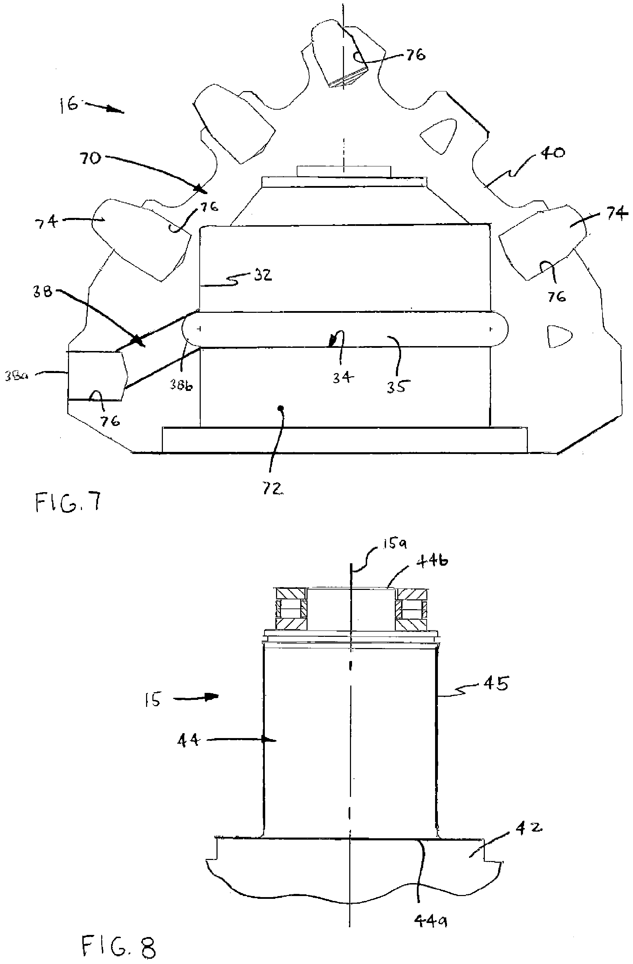

More specifically, each shaft 15 has a central axis 15a that is angled so as to intersect the drill centerline 13, the plurality of shafts 15 extending or facing generally toward the other shafts 15, as depicted in Figs. 3 and 4. Referring particularly to Fig. 8, each shaft 15 preferably includes a generally cylindrical body 44 with an inner end 44a mounted on the associated support portion 42, an opposing, free outer end 44b, and an outer circumferential surface 45. The inner member 22 of the associated bearing 20 is disposeable about the outer circumferential surface 45 and is preferably retained thereon by an annular locking member 46 (e.g., a C-clip, threaded nut, etc.). However, the bearing inner member 22 may be secured on the shaft 15 by any other appropriate means, such as for example, a friction or interference fit between the inner member 22 and the shaft 15.

Furthermore, the rotary drill 12 preferably includes at least one drill pipe (not shown) and the base 14 is coupleable with the one or more sections of drill pipe, either directly or through an intermediate collar disposed between the base 14 and the drill pipe. The base 14 preferably has exterior threads 43 formed at an upper end 40a of the base cylindrical portion 40 for threadably connecting with the drill pipe or collar. As is well known in the art of rotary drills, the drill pipe is rotated by an appropriate driver, so as to thereby rotate the connected base 14 about the drill centerline 13. Thus, rotation of the drill pipe rotates each bit 16 about the associated shaft 15 when the bit 16 is engaged with a ground surface. That is, as the base 14 is rotated by the drill pipe, the one or more bits 16 "roll" on the ground surface, and thus each rotate about the central axis 15a of the associated shaft 15.

Referring now to Figs. 1 and 4-6, the bearing 20 is preferably a "rolling element" bearing that further includes a plurality of rolling elements 50 disposed radially between the bearing inner and outer members 22, 24, respectively. Such rolling elements 50 may be of any appropriate type, for example, balls, cylindrical rollers, tapered rollers, etc., and the bearing 20 may include a single row of rolling elements or a plurality of rows of rolling elements, e.g., a double row bearing as depicted in Figs. 1 and 4-6. Further, each one of the bearing inner and outer members 22, 24 includes a generally annular body 52, 54, respectively, each having opposing axial ends 52a, 52b and 54a, 54b, respectively. The inner member body 52 has an outer circumferential surface 53 providing at least one first bearing race 56 and the outer member body 54 has an inner circumferential surface 55 providing at least one second bearing race 58. The inner member body 52 further has a central bore 60 sized to receive a portion of the associated shaft 15, to thereby mount the bearing 20 to the shaft 15. Preferably, the bearing 20 further includes a first seal 61A located generally proximal to and between the first ends 52a, 54a of the inner and outer bearing members 22, 24 and a second seal 61B located generally proximal to and between the second ends 52a, 52b of the two bearing members 22, 24. The first and second seals 61A, 61B are each configured to prevent liquid or solid contaminants from entering the generally annular space S_{B} between the two bearing members 22, 24.

In certain bearing constructions, the bearing outer member 24 has an annular shoulder 62 extending radially outwardly from the remainder of the outer member body 54 and providing a portion 28a of the outer member outer surface 28, as depicted in Fig. 9. With such a shoulder 62, the one or more bearing recesses 30, and preferably the single, continuous bearing groove 31, extends generally radially inwardly from the outer surface portion 28a and into the shoulder 62.

Referring to Figs. 10 and 11, the bearing 20 may also include a seal 64 configured to seal the space S_{A} between the bearing 20 and the base 14, specifically between the inner axial end 54b of the bearing outer member 24 and sections of the support portion 42 surrounding the associate shaft 15. Preferably, the bearing outer member 24 has a generally annular groove 66 extending into the outer member 24 from the inner axial end 54b and the seal 64 is disposed within the groove 66 and is configured to seal against the base 14, in particular against a surface 43 surrounding the associated shaft 15. Furthermore, the seal 64 preferably includes a sealing member 68 and a biasing member 69 configured to bias the sealing member generally toward the surface 43 of the base 14, but may have any other appropriate construction or configuration.

Although preferably a rolling element bearing, the bearing 20 may be any other appropriate type of bearing. For example, the bearing 20 may be a "plain" or "journal" bearing in which the bearing outer member inner circumferential surface 55 is slidably disposed generally against the bearing inner member outer surface 53, and may include a lubricant between the adjacent or juxtaposed surfaces 53, 55.

Referring now to Figs. 1, 3, 4, 6 and 7, the bit 16 preferably includes a generally conical body 70 that provides the inner and outer surfaces 32, 40 and the passage 38 extends through the body 70. The inner surface 32 defines a cavity 72 that is sized to receive the bearing 20, such that the bearing 20 and the associated shaft 15 are at least partially disposed within the cavity 72. Further, a plurality of cutting inserts 74 are preferably mounted on the conical body 70 so as to extend outwardly from the bit outer surface 40, which function to cut and/shear material from a ground surface as the bit 16 rotates upon the associated shaft 15. More specifically, the bit body 70 has a plurality of mounting pockets 76 extending inwardly from the outer surface 40, and each cutting insert 74 is disposed partially within a separate one of the pockets 76. Preferably, the one or more bit access passages 38 each extend into one of the mounting pockets 76, such that the pocket 76 provides the passage outer end 38a and the cutting insert 74 disposed within the pocket 76 provides a "cap" for the passage 38, as best shown in Fig. 1. However, each of the one or more access passages 38 may be formed completely separate from the mounting pockets 76, such that each passage outer end 38a is located at a point on the bit surface 40 between the pockets 76 (structure not shown). Furthermore, a seal 80 is preferably disposed between the bit body 70 and sections of the base support portion 42 surrounding the associated shaft 15, as indicated in Figs. 1 and 9.

Although preferably incorporated into a rotary drill 12 as described above and depicted in the drawings, the bearing assembly 10 may be included or incorporated into any other mechanical assembly 12 of at least first and second components, in which at least one of the components is rotatable with respect to the other component. In other words, the scope of the present invention includes any mechanical assembly 12 comprising an inner component, a bearing including an inner member disposed about at least a portion of the inner component and an outer member disposed about the inner member, the bearing outer member having an outer surface and a groove extending radially inwardly from the outer surface, an outer component having an inner surface defining a cavity, an outer surface and a passage extending between the inner and outer surfaces, the cavity being configured to receive at least a portion of the bearing, and at least one retainer insertable through the outer component passage, at least partially disposeable within the bearing groove and configured to engage with the outer component so as to rotatably couple the outer component with the inner component.

It will be appreciated by those skilled in the art that changes could be made to the embodiments described above without departing from the broad inventive concept thereof. It is understood, therefore, that this invention is not limited to the particular embodiments disclosed, but it is intended to cover modifications within the scope of the present invention as generally defined in the appended claims.

## Claims

1. A rotary drill (12) comprising:
abase (14) with a shaft (15);
a bearing (20) having a central axis (21) and including an inner member (22) disposed on the shaft and an outer member (24) disposed about the inner member, the bearing outer member (24) being angularly displaceable relative to the inner member and having an outer circumferential surface (28) and a bearing recess (30) extending generally radially inwardly from the outer circumferential surface (28);
a bit (16) having an inner circumferential surface (32) defining a cavity, the bit being disposed about at least a portion of the shaft (15) such that the bearing is disposed at least partially within the cavity; the bit having a recess (34) extending generally radially outwardly from the inner circumferential surface (32), whereby each of the bearing recess (30) and the bit recess (34) is formed as an at least partially annular groove (31, 35), the annular grooves (31, 35) being aligned so as to form a retention channel (37);
**characterized by**
further comprising a plurality of retainers (26) in the form of spherical balls (27) spaced circumferentially about the central axis (21), whereby each spherical ball (27) is simultaneously disposed within the retention channel (37) and configured to releasably lock the bit (16) onto the bearing (20) and to transfer radial and axial loading between the bit and the bearing (20), and thus also between the bit and the shaft, wherein the bit (16) has an outer surface and a passage (38) extending between the bit outer surface and the inner circumferential surface (32), the passage being communicable with the retention channel (37) such that the plurality of retainers is installable into the retention channel (37) through the bit passage (38).

2. The rotary drill according to claim 1, **characterized in that** each of the bearing recess (31) and the bit recess (35) is a continuous annular groove extending circumferentially about the bearing central axis (21), and has generally partially circular cross-sections in directions perpendicular to the central axis, so as to form a single, continuous annular retention channel (37).

3. The rotary drill according to claim 1, **characterized in that**
the bearing (20) further includes a plurality of rolling elements (50) disposed radially between the inner and outer members (22, 24).

4. The rotary drill according to claim 1, **characterized in that** the bearing inner member (22) has an outer circumferential surface and the bearing outer member (24) has an inner circumferential surface slidably disposed against the inner member outer surface.

5. The rotary drill according to claim 1, **characterized in that** the bearing outer member (24) has an annular shoulder (62) extending radially outwardly from the remainder of the outer member and providing a portion of the outer member outer circumferential surface (28), the bearing recess (30) extending generally radially inwardly from the outer surface portion into the shoulder (62).

6. The rotary drill according to claim 1, **characterized in that**:
the base (14) has a central axis (13) and includes a plurality of the shafts (15) spaced circumferentially about the central axis (13); and
a plurality of bits, each bit being disposed about a separate one of the shafts.

7. The rotary drill according to claim 1, **characterized in that**:
the bit (16) includes a generally conical body (70), the conical body providing the inner and outer surfaces and the passage (38) extending through the body, and a plurality of cutting inserts (74) mounted on the conical body so as to extend outwardly from the bit outer surface.

8. The rotary drill according to claim 1, **characterized in that**
the bit passage (38) is angled in a radially inward direction toward a front end (16a) or toward a rear end (16b) of the bit (16).

## Patentansprüche

1. Drehbohrer (12), umfassend:
eine Basis (14) mit einem Schaft (15),
ein Lager (20), das eine Mittelachse (21) aufweist und ein an dem Schaft angeordnetes inneres Element (22) und ein um das innere Element angeordnetes äußeres Element (24) umfasst, wobei das äußere Lagerelement (24) relativ zu dem inneren Element winkelig verstellbar ist und eine äußere Umfangsfläche (28) sowie eine Lagerausnehmung (30) aufweist, die sich im Allgemeinen von der äußeren Umfangsfläche (28) radial nach innen erstreckt,
einen Bohreinsatz (16), der eine einen Hohlraum definierende innere Umfangsfläche (32) aufweist, wobei der Bohreinsatz auf eine solche Weise um wenigstens einen Abschnitt des Schafts (15) angeordnet ist, dass das Lager wenigstens zum Teil in dem Hohlraum angeordnet ist, wobei der Bohreinsatz eine Ausnehmung (34) aufweist, die sich im Allgemeinen von der inneren Umfangsfläche (32) radial nach außen erstreckt, wodurch die Lagerausnehmung (30) und die Bohreinsatzausnehmung (34) jeweils als eine wenigstens zum Teil ringförmige Rille (31, 35) ausgebildet sind, wobei die ringförmigen Rillen (31, 35) so ausgerichtet sind, dass sie einen Haltekanal (37) bilden,
**gekennzeichnet durch**
ferneres Umfassen einer Vielzahl von Halterungen (26) in Form von sphärischen Kugeln (27), die umlaufend um die Mittelachse (21) beabstandet sind, wodurch jede sphärische Kugel (27) gleichzeitig in dem Haltekanal (37) angeordnet und so ausgelegt ist, dass sie den Bohreinsatz (16) lösbar an dem Lager (20) arretiert und die radiale und axiale Last zwischen dem Bohreinsatz und dem Lager (20) und somit auch zwischen dem Bohreinsatz und dem Schaft überträgt, wobei der Bohreinsatz (16) eine Außenfläche und einen Durchgang (38) aufweist, der sich zwischen der Außenfläche des Bohreinsatzes und der inneren Umfangsfläche (32) erstreckt, wobei der Durchgang auf eine solche Weise mit dem Haltekanal (37) in Verbindung steht, dass die Vielzahl von Halterungen durch den Bohreinsatzdurchgang (38) in den Haltekanal (37) einbaubar ist.

2. Drehbohrer nach Anspruch 1, **dadurch gekennzeichnet, dass** die Lagerausnehmung (31) und die Bohreinsatzausnehmung (35) jeweils eine durchgehende ringförmige Rille sind, die sich umlaufend um die Mittelachse (21) des Lagers erstreckt und im Allgemeinen teilweise kreisförmige Querschnitte in Richtungen aufweist, die rechtwinklig zu der Mittelachse verlaufen, um einen einzelnen, durchgehenden ringförmigen Haltekanal (37) zu bilden.

3. Drehbohrer nach Anspruch 1, **dadurch gekennzeichnet, dass** das Lager (20) ferner eine Vielzahl von Wälzkörpern (50) umfasst, die radial zwischen dem inneren und dem äußeren Element (22, 24) angeordnet sind.

4. Drehbohrer nach Anspruch 1, **dadurch gekennzeichnet, dass** das innere Lagerelement (22) eine äußere Umfangsfläche aufweist und das äußere Lagerelement (24) eine innere Umfangsfläche aufweist, die verschiebbar gegen die Außenfläche des inneren Elements angeordnet ist.

5. Drehbohrer nach Anspruch 1, **dadurch gekennzeichnet, dass** das äußere Lagerelement (24) eine ringförmige Schulter (62) aufweist, die sich von dem Rest des äußeren Elements radial nach außen erstreckt und einen Abschnitt der äußeren Umfangsfläche (28) des äußeren Elements bereitstellt, wobei sich die Lagerausnehmung (30) von dem Außenflächenabschnitt im Allgemeinen radial nach innen in die Schulter (62) erstreckt.

6. Drehbohrer nach Anspruch 1, **dadurch gekennzeichnet, dass**
die Basis (14) eine Mittelachse (13) aufweist und eine Vielzahl der Schäfte (15) umfasst, die umlaufend um die Mittelachse (13) beabstandet sind, und
eine Vielzahl von Bohreinsätzen, wobei jeder Bohreinsatz um einen gesonderten der Schäfte angeordnet ist.

7. Drehbohrer nach Anspruch 1, **dadurch gekennzeichnet, dass** der Bohreinsatz (16) einen im Allgemeinen konischen Körper (70) umfasst, wobei der konische Körper die Innen- und die Außenfläche bereitstellt und sich der Durchgang (38) durch den Körper erstreckt, sowie eine Vielzahl von Schneideinsätzen (74), die so an dem konischen Körper befestigt sind, dass sie sich von der Außenfläche des Bohreinsatzes nach außen erstrecken.

8. Drehbohrer nach Anspruch 1, **dadurch gekennzeichnet, dass** der Bohreinsatzdurchgang (38) in einer radial nach innen verlaufenden Richtung zu einem vorderen Ende (16a) oder einem hinteren Ende (16b) des Bohreinsatzes (16) abgewinkelt ist.

## Revendications

1. Foreuse rotative (12), comprenant :
une base (14) avec un arbre (15) ;
un palier (20) ayant un axe central (21) et incluant un élément intérieur (22) disposé sur l'arbre et un élément extérieur (24) disposé autour de l'élément intérieur, l'élément extérieur de palier (24) étant angulairement déplaçable relativement à l'élément intérieur et ayant une surface circonférentielle extérieure (28) et un évidement de palier (30) s'étendant de façon généralement radiale vers l'intérieur à partir de la surface circonférentielle extérieure (28) ;
un trépan (16) ayant une surface circonférentielle intérieure (32) définissant une cavité, le trépan étant disposé autour d'au moins une portion de l'arbre (15) de telle sorte que le palier soit disposé au moins partiellement à l'intérieur de la cavité ; le trépan ayant un évidement (34) s'étendant généralement radialement vers l'extérieur à partir de la surface circonférentielle intérieure (32), moyennant quoi chacun de l'évidement de palier (30) et de l'évidement de trépan (34) est sous forme de rainure au moins partiellement annulaire (31, 35), les rainures annulaires (31, 35) étant alignées afin de former un canal de retenue (37) ;
**caractérisée en ce que**
il comprend en outre une pluralité d'organes de retenue (26) sous la forme de billes sphériques (27) espacées circonférentiellement autour de l'axe central (21), moyennant quoi chaque bille sphérique (27) est simultanément disposée à l'intérieur du canal de retenue (37) et configuré pour verrouiller de façon libérable le trépan (16) sur le palier (20) et pour transférer une charge radiale et axiale entre le trépan et le palier (20), et ainsi également entre le trépan et l'arbre, dans laquelle le trépan (16) a une surface extérieure et un passage (38) s'étendant entre la surface extérieure de trépan et la surface circonférentielle intérieure (32), le passage pouvant communiquer avec le canal de retenue (37) de telle sorte que la pluralité d'organes de retenue soit installable dans le canal de retenue (37) à travers le passage de trépan (38).

2. Foreuse rotative selon la revendication 1, **caractérisée en ce que** chacun de l'évidement de palier (31) et de l'évidement de trépan (35) est une rainure annulaire continue s'étendant circonférentiellement autour du palier axe central (21), et a des sections transversales généralement partiellement circulaires dans des directions perpendiculaires à l'axe central, afin de former un seul canal de retenue annulaire continu (37).

3. Foreuse rotative selon la revendication 1, **caractérisée en ce que** le palier (20) inclut une pluralité d'éléments roulants (50) disposés radialement entre les éléments intérieur et extérieur (22, 24).

4. Foreuse rotative selon la revendication 1, **caractérisée en ce que** le palier élément intérieur (22) a une surface circonférentielle extérieure et l'élément extérieur de palier (24) a une surface circonférentielle intérieure disposée de façon coulissante contre l'élément intérieur surface extérieure.

5. Foreuse rotative selon la revendication 1, **caractérisée en ce que** l'élément extérieur de palier (24) a un épaulement annulaire (62) s'étendant radialement vers l'extérieur à partir du reste de l'élément extérieur et fournissant une portion de l'élément surface extérieure circonférentielle extérieure (28), l'évidement de palier (30) s'étendant généralement radialement vers l'intérieur, à partir de la portion de surface extérieure, dans l'épaulement (62).

6. Foreuse rotative selon la revendication 1, **caractérisée en ce que** :
la base (14) a un axe central (13) et inclut une pluralité des arbres (15) espacés circonférentiellement autour de l'axe central (13) ; et
une pluralité de trépans, chaque trépan étant disposé autour d'un distinct des arbres.

7. Foreuse rotative selon la revendication 1, **caractérisée en ce que** :
le trépan (16) inclut un corps généralement conique (70), le corps conique fournissant les surfaces intérieure et extérieure et le passage (38) s'étendant à travers le corps, et une pluralité de pièces rapportées de coupe (74) montées sur le corps conique afin de s'étendre vers l'extérieur à partir de la surface extérieure de trépan.

8. Foreuse rotative selon la revendication 1, **caractérisée en ce que**
le passage de trépan (38) est incliné dans une direction radialement intérieure vers une extrémité avant (16a) ou vers une extrémité arrière (16b) du trépan (16).
